# EUROPEAN PATENT SPECIFICATION

(11) **EP 1 382 864 B1**
(45) Date of publication and mention of the grant of the patent: **25.10.2006**
(21) Application number: 03291774.2
(22) Date of filing: 17.07.2003
(51) Int. Cl.: F16B 35/06, F16B 35/04, B21D 28/24, B21D 22/04

(54) **Screw for a dimpled zone**
Schraube für ein Bereich mit Vertiefungen
Vis pour une zone avec des alveoles

(30) Priority: 18.07.2002 AU 2002950242
(43) Date of publication of application: 21.01.2004
(73) Proprietor: ITW AFC Pty Ltd., Oakleigh, Victoria 3166 (AU)
(72) Inventor: Tovenati, Francis Bernard, Glen Iris, Victoria 3146 (AU)
(74) Representative: Bloch, Gérard

(56) References cited:
- US-A- 2 982 166
- US-A- 3 313 197
- US-A- 3 370 631
- US-A- 4 445 264
- US-A- 4 907 926

## Description

The present invention relates to screws and more particularly to screws for use in assembling metal frame sections for use in building construction.

When assembling together metal frame sections for use in building construction, holes may be pre-punched into a frame section to receive a fastening screw by which that frame section is secured to an adjacent frame section similarly pre-punched to receive the screw in threaded engagement therewith. Although, typically, the hole is formed within the central part of a recessed or dimpled zone formed when punching the hole and in which part of the head of the screw can sit, existing screws for this purpose have a head profile with a peripheral edge of substantial depth which tends to project above the surface of the frame section. This projecting peripheral edge of substantial depth has a tendency to catch on other components such as other frame sections in a factory situation where trusses and other frames are pre-assembled. In situations where the surface of the frame section from which the head of the screws project is itself intended to carry cladding material such as plasterboard sheeting, the projecting edges of the heads do tend to impede easy application of the sheeting as the heads can prevent sliding of the sheeting across the surface of the frame section during application.

According to the present invention there is provided a screw according to claim 1.

The present invention also relates to an assembly according to claim 4.

With the configuration defined above, screws in accordance with the invention used to assemble metal sections will not exhibit a head profile projecting from the surface of the frame section sufficient to represent a substantial impediment to sliding across the surface of the frame section.

It should be noted that US 3 313 197 discloses a screw with a peripheral edge surface which is spaced apart from its shaft by a neck which prevents the screw from being driven into threaded engagement with a hole formed in a dimpled zone in a metal section and, at the same time, the peripheral edge surface being seated within the dimpled zone.

With respect to the teaching of US 4 445 264, it relates, not to a screw, but to a pop rivet.

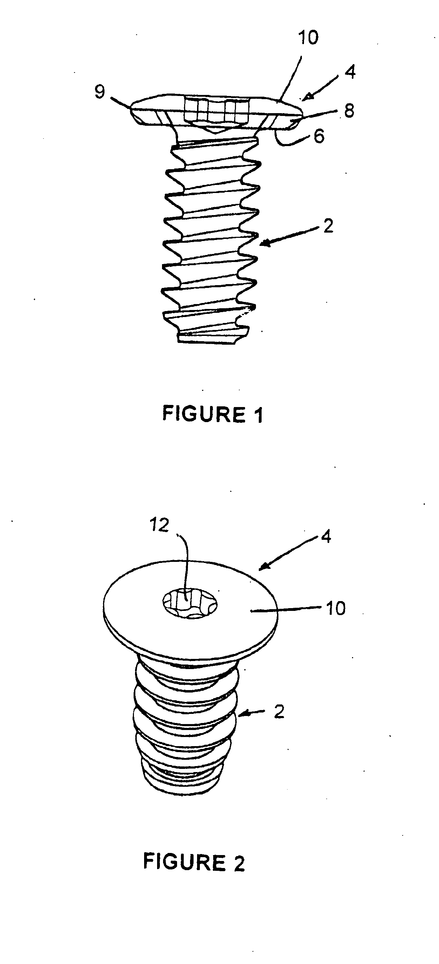

An embodiment of the invention will now be described by way of example with reference to the accompanying drawings in which:-
Figure 1 is a side view of a screw in accordance with the preferred embodiment of the invention;
Figure 2 is a perspective view of the screw from above;
Figure 3 is a perspective view of the screw from below; and
Figure 4 shows the manner in which the screw is used to secure together two metal frame sections by driving into holes pre-formed in the sections.

As shown in the accompanying drawings a screw in accordance with the invention comprises a threaded shank 2, the thread preferably being a buttress thread which provides improved resistance to pull-out when used with relatively thin metal sections. The undersurface of the head 4 of the screw has a substantially planar bottom face 6 and a peripheral edge surface 8 which diverges upwardly and outwardly from the face 6. The upwardly divergent peripheral edge surface 8 leads via an edge 9 into a slightly domed upper surface 10. A socket 12 for receiving a suitable driver such as an Allen key is formed in the central part of the head 4.

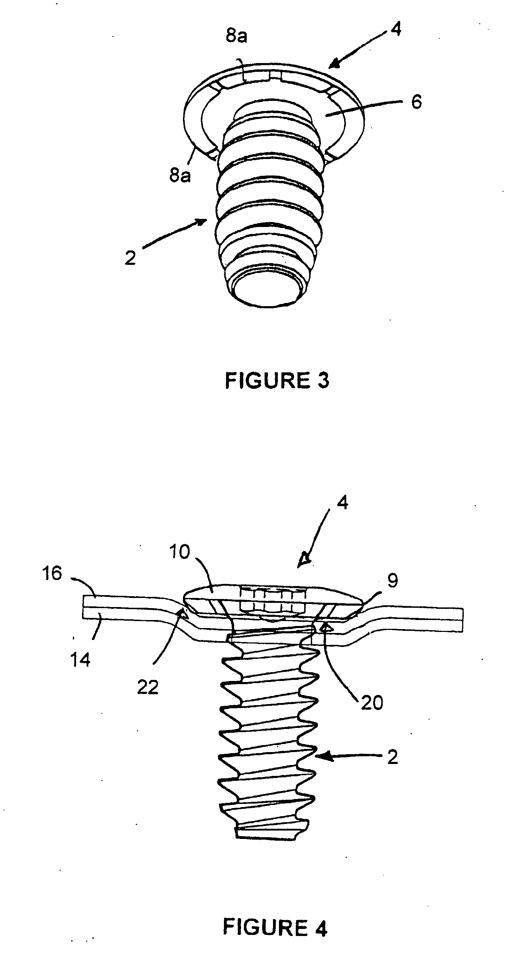

Figure 4 shows the screw when used to secure together two metal frame sections 14,16 each pre-punched with a hole to receive the screw in the threaded engagement therewith. As shown, each hole is formed within the central part of a dimple formed during punching of the hole and consisting of a recessed land 20 of substantially circular shape with an inclined peripheral surface 22 extending between the land 20 and the outer surface of the section. The planar bottom face 6 of the head 4 lies against or closely adjacent to, the recessed land 20 of the dimple and the inclination of the inclined peripheral surface 22 of the dimple substantially matches that of the peripheral edge surface 8 so that the surface 8 is able to sit within the dimple. As a result of this configuration, the head 4 of the screw does not present substantial projecting edge to form an impediment to sliding of another metal section, plasterboard sheet, or other article across the surface of the section. More particularly, the edge 9 which lies at the transition between the undersurface and the upper surface of the head 4, lies substantially at the level of the surface of the metal section such that it is substantially only the domed upper surface which projects beyond the surface of the metal section and this domed upper surface will not tend to impede sliding movement either of the metal section or other components along the surface of the section.

Advantageously, the peripheral edge surface 8 of the head is provided with ribs 8a to provide torque robbing on assembly by providing increased resistance to rotation of the screw.

The embodiment has been described by way of example only and modifications are possible within the scope of the invention, as defined by the appended claims.

## Claims

1. A screw for driving into threaded engagement with a hole formed in a dimpled zone in a metal section (14, 16), wherein the head (4) of the screw has an undersurface comprising a lower face (6), and a peripheral edge surface (8) which diverges outwardly from the lower face (6), such that the peripheral edge surface (8) can sit within the dimpled zone and lies against an inclined peripheral surface of the dimpled zone, and which is provided with formations (8a) operative to provide increased resistance of the screw to provide a torque robbing effect.

2. A screw according to claim 1, wherein the lower face (6) is substantially planar extending substantially perpendicularly to the axis of the screw.

3. A screw according to claim 1 or claim 2, wherein the thread is a buttress thread.

4. An assembly having a first metal section (16) secured to a second metal section (14) by a screw as claimed in any one of the preceding claims, wherein the first metal section (16) has a dimpled zone with a hole to receive the screw and the head (4) of the screw sits within the dimpled zone such that the head (4) of the screw does not present a profile causing a substantial impediment to sliding movement across the surface of the first metal section (16), the undersurface of the head (4) corresponding to the profile of the dimpled zone.

5. An assembly according to claim 4, wherein the upper surface (10) of the head (4) is domed and a peripheral edge (9) of the head (4) forming a transition between the peripheral edge surface (8) of the undersurface and the upper surface (10) of the head does not project beyond the surface of the first metal section (16).

6. An assembly according to any one of claims 4 and 5, wherein the assembly is a frame for use in building construction.

## Patentansprüche

1. Schraube zum Treiben in einen Gewindeeingriff mit einem in einem mit einer Vertiefung versehenen Bereich in einem Metallprofil (14, 16) ausgebildeten Loch, wobei der Kopf (4) der Schraube eine untere Fläche mit einer Unterseite (6) und eine Umfangsrandfläche (8) aufweist, die von der Unterseite (6) nach außen divergiert, so dass die Umfangsrandfläche (8) in dem mit einer Vertiefung versehenen Bereich sitzen kann und an eine geneigte Umfangsfläche des mit einer Vertiefung versehenen Bereichs anliegt, und die mit Ausbildungen (8a) versehen ist, die dahingehend wirken, der Schraube einen erhöhten Widerstand zu verleihen, um eine Drehmomentabbauwirkung bereitzustellen.

2. Schraube nach Anspruch 1, bei der die Unterseite (6) im Wesentlichen planar ist und sich im Wesentlichen senkrecht zur Achse der Schraube erstreckt.

3. Schraube nach Anspruch 1 oder 2, bei der das Gewinde ein Sägezahngewinde ist.

4. Anordnung mit einem ersten Metallprofil (16), das durch eine Schraube nach einem der vorhergehenden Ansprüche an einem zweiten Metallprofil (14) befestigt ist, wobei das erste Metallprofil (16) einen mit einer Vertiefung versehenen Bereich mit einem Loch zur Aufnahme der Schraube aufweist und der Kopf (4) der Schraube in dem mit einer Vertiefung versehenen Bereich sitzt, so dass der Kopf (4) der Schraube kein Profil aufweist, das eine Gleitbewegung über die Fläche des ersten Metallprofils (16) wesentlich behindert, wobei die untere Fläche des Kopfes (4) dem Profil des mit einer Vertiefung versehenen Bereichs entspricht.

5. Anordnung nach Anspruch 4, bei der die Oberseite (10) des Kopfes (4) gewölbt ist und ein Umfangsrad (9) des Kopfes (4), der einen Übergang zwischen der Umfangsrandfläche (8) der unteren Fläche und der oberen Fläche (10) des Kopfes bildet, nicht über die Fläche des ersten Metallprofils (16) vorragt.

6. Anordnung nach einem der Ansprüche 4 und 5, bei der es sich um einen Rahmen zur Verwendung im Hochbau handelt.

## Revendications

1. Vis à entraîner en engagement fileté avec un trou formé dans une zone emboutie dans une section métallique (14, 16), dans laquelle la tête (4) de la vis présente une surface inférieure, comprenant une face inférieure (6) et une surface de bord périphérique (8) s'écartant vers l'extérieur à partir de la face inférieure (6), de telle sorte que la surface de bord périphérique (8) puisse s'adapter à l'intérieur de la zone emboutie et s'appuie contre une surface périphérique inclinée de la zone emboutie, et comportant des formations (8a) servant à assurer une résistance accrue de la vis pour obtenir un effet de disparition de couple.

2. Vis selon la revendication 1, dans laquelle la face inférieure (6) est sensiblement plane et s'étend essentiellement perpendiculairement à l'axe de la vis.

3. Vis selon la revendication 1 ou la revendication 2, dans laquelle le filet est un filet trapézoïdal.

4. Ensemble comprenant une première section métallique (16) fixée à une deuxième section métallique (14) par une vis selon l'une quelconque des revendications précédentes, dans lequel la première section métallique (16) comporte une zone emboutie comprenant un trou destiné à recevoir la vis, et la tête (4) de la vis s'adapte à l'intérieur de la zone emboutie de telle sorte que la tête (4) de la vis ne présente pas un profil créant un obstacle substantiel au mouvement de coulissement à travers la surface de la première section métallique (16), la surface inférieure de la tête (4) correspondant au profil de la zone emboutie.

5. Ensemble selon la revendication 4, dans lequel la surface supérieure (10) de la tête (4) est bombée, et un bord périphérique (9) de la tête (4) formant une transition entre la surface de bord périphérique (8) de la surface inférieure et la surface supérieure (10) de la tête ne fait pas saillie au-delà de la surface de la première section métallique (16).

6. Ensemble selon l'une quelconque des revendications 4 et 5, dans lequel l'ensemble est un cadre à utiliser dans la construction de bâtiments.
